Europäisches Patentamt

**European Patent Office**

**Office européen des brevets**

(19)

(11) Numéro de publication: **0 192 905**

**A1**

(12) **DEMANDE DE BREVET EUROPEEN**

(21) Numéro de dépôt: 85402579.8

(22) Date de dépôt: 20.12.85

(51) Int. Cl.⁴: **B 67 D 5/58**

(30) Priorité: 08.01.85 FR 8500197

(43) Date de publication de la demande:
03.09.86 Bulletin 86/36

(84) Etats contractants désignés:
AT BE CH DE GB IT LI NL

(71) Demandeur: SOCIETE ANONYME POUR TOUS
APPAREILLAGES MECANIQUES SATAM
41/43 rue des Bas
F-92600 Asnieres(FR)

(72) Inventeur: Gazeau, Daniel
4, rue de Balzac
F-95130 Franconville(FR)

(74) Mandataire: Loyer, Bertrand et al,
Cabinet Pierre Loyer 18, rue de Mogador
F-75009 Paris(FR)

(54) Dispositif perfectionné pour le transvasement et le dégazage de liquide.

(57) Dispositif pour le transvasement de liquide avec dégazage et mesurage, notamment pour les hydrocarbures, comprenant, d'amont en aval une alimentation sous pression (2), une cuve (3) surmontée d'une cloche de dégazage (18) un flotteur (8) placé dans ladite cloche et commandant une soupape (9) contrôlant l'orifice (10) de dégazage reliant la cuve à un volume de dégazage (4, 12) communiquant à l'air libre, un compteur volumétrique (5) interposé entre la cuve (3) et la sortie de liquide (19) sur laquelle est prévue une vanne d'arrêt (6) soumise sur une face à la pression du liquide et sur l'autre face à la pression régnant dans le volume de dégazage (4, 12). Le volume (4, 12) communique à l'air libre ou à la pression atmosphérique uniquement par un orifice de fuite calibré de section inférieure à 3 mm² pour des pressions d'alimentation supérieures à 1 bar et pouvant atteindre 3 à 5 mm² lorsque la pression d'alimentation est comprise entre 1 et 0,1 bar.

Fig. 2

EP 0 192 905 A1

## Dispositif perfectionné pour le transvasement et le dégazage de liquide.

La présente invention concerne un perfectionnement aux dispositifs pour transvaser ou distribuer des liquides, notamment des hydrocarbures, tout en effectuant leur mesurage, en particulier en réponse aux exigences de la réglementation.

Le problème consiste à transvaser des liquides sans entraînement de gaz, et à permettre de vider complètement les compartiments des camions de livraison sans entraîner d'erreur sur la livraison, erreur due à la présence de gaz.

Dans le domaine des hydrocarbures, les transvasements par pompe sont couramment pratiqués. Ces opérations nécessitent des équipements compliqués, lourds, encombrants et d'un coût élevé tels que :

- des cuves séparatrices de gaz très volumineuses,

- des pompes spéciales associées à un système détecteur de gaz qui doit modifier les caractéristiques de la pompe pour réguler le débit et permettre l'élimination correcte des gaz,

- des installations complètes très compliquées qui nécessitent un apport d'énergie extérieure (air comprimé) qui permet de piloter des détecteurs de gaz et d'agir sur le régime de la pompe de distribution,

- un système purgeur lié à une vanne qui doit arrêter la distribution en présence de gaz.

Un dispositif de ce dernier type est décrit au brevet USA 3.083.874 au nom de RICHARDS et ce dispositif consiste à prévoir, entre la pompe et le compteur une cloche de dégazage contenant un flotteur qui contrôle d'une part un orifice de mise à l'air libre (ou de retour au réservoir) et d'autre part un orifice relié à une chambre de mise en pression d'une vanne d'arrêt, cette vanne étant placée sur le circuit de fluide en aval du compteur et contretenue par un ressort.

Ainsi, théoriquement, lorsqu'une accumulation de gaz se produit, le flotteur provoque d'une part la mise à l'air libre de la cloche et d'autre part l'arrêt de la distribution jusqu'à ce que les gaz soient éliminés : le flotteur ferme alors les orifices, la vanne d'arrêt s'ouvre et la distribution reprend.

Cependant en pratique, ce dispositif ne fonctionne pas de façon satisfaisante et laisse passer une quantité variable de gaz dans le circuit de distribution, ce qui fausse le mesurage dans des proportions inacceptables.

En effet, pour obtenir un dégazage rapide, il est nécessaire de prévoir des sections de passage importantes sur la mise à l'air libre (par exemple de l'ordre de 50 mm$^2$ à 100 mm$^2$). Il en résulte d'importantes perturbations dans le régime des pressions qui règnent respectivement entre la pompe et le compteur, au niveau de la vanne d'arrêt et sur chacune des faces de la vanne d'arrêt. En outre, la chute de pression dans le liquide à distribuer, provoquée par la mise à l'air libre de la cloche de dégazage, provoque une intensification brusque du dégagement des gaz sous forme d'une émulsion qui perturbe le fonctionnement du flotteur, provoque une remontée intempestive et par voie de conséquence, une perturbation de la vanne d'arrêt.

La vanne d'arrêt vient ainsi à se fermer mal ou à s'ouvrir après une première fermeture et par suite à laisser passer des gaz, ce qui est tout à fait incompatible avec le but recherché.

Un autre dispositif est décrit au brevet USA 3.419.035 dans lequel le dégazage s'opère par l'intermédiaire de la chambre de mise en pression du clapet qui communique à l'air libre d'une part par un orifice relativement petit et d'autre part par un orifice important contrôlé par un second clapet qui s'ouvre lorsque le clapet d'arrêt est mis en pression.

Mais dans ce dispositif, le mesureur est situé en aval du clapet d'arrêt dont la membrane se trouve donc soumise d'un côté à la pression d'alimentation de la cuve additionnée du poids de liquide, l'autre côté étant soumise au maximum à la même pression diminuée des pertes de charge de sorte que la fermeture repose entièrement sur l'action mécanique du ressort ; il en résulte un temps de réponse à la fermeture qui est incompatible avec le but recherché. D'autre part dès que le clapet est mis en pression, l'orifice de dégazage rapide s'ouvre, ce qui provoque une chute de pression au clapet, des battements et les mêmes défauts que le brevet précédemment cité, notamment la formation d'émulsion. Le fonctionnement décrit dans ce brevet ne peut donc en réalité se produire que pendant le bref laps de temps de la montée en pression du clapet, c'est-à-dire pendant la période précédent la fermeture du clapet.

L'invention a pour objet un dispositif remédiant à ces inconvénients.

Le dispositif selon l'invention est du type comprenant d'amont en aval une alimentation sous pression, une cuve, et une cloche de dégazage dans laquelle se trouvent un flotteur commandant une soupape contrôlant un orifice reliant la cuve à un volume de dégazage communiquant à l'air libre, un compteur volumétrique interposé entre la cuve et la sortie de liquide, sur laquelle est prévue une vanne d'arrêt soumise sur une face à la pression du liquide en aval du compteur et sur l'autre face à la pression régnant dans le volume de dégazage et il est caractérisé en ce que ce volume communique avec la pression atmosphérique uniquement par un orifice de fuite calibré de section très faible inférieure à 3 mm$^2$ pour des pressions d'alimentation supérieures à 1 bar, cette section pouvant être portée à des valeurs de l'ordre de 3 à 5 mm$^2$ lorsque la pression d'alimentation est inférieure à 1 bar, de telle sorte qu'il ne se produise pratiquement pas de chute de pression dans la cuve lorsque s'ouvre l'orifice de dégazage et que la pression appliquée à la vanne d'arrêt soit maintenue pendant la totalité de la durée de l'ouverture de cet orifice à une valeur pratiquement égale à celle régnant dans la cuve.

Plus précisément, la section de fuite sera de préférence de l'ordre de 1 mm$^2$ pour des pressions de l'ordre de 4 à 10 bars, les sections de 3 à 5 mm$^2$ convenant seulement pour des pressions de 1 à 0,1 bar.

Grâce à ces dispositions, d'une part la vanne d'arrêt se ferme quasi instantanément à l'ouverture de l'orifice de dégazage et de plus elle reste fermée sans battement pendant toute la durée du dégazage pour ne s'ouvrir à nouveau qu'une fois celui-ci terminé, d'autre part le dégazage est très progressif de sorte qu'il ne se produit aucune formation d'émulsion.

A cet égard, la valeur très faible de la section globale de fuite est très importante puisqu'elle conditionne l'instantanéité de fermeture, l'absence de chute de pression et le maintien de la fermeture.

Cette solution, qui est paradoxale, puisqu'elle consiste à réaliser le dégazage en supprimant l'orifice de dégazage lui-même, et qui va à l'encontre de la direction normale consistant à dégazer le plus rapidement possible, fournit les résultats les plus précis et fiables en ce qui concerne le mesurage, avec un fonctionnement très souple ; l'augmentation de temps de dégazage et par suite l'augmentation des temps d'interruption de la distribution, s'avère un inconvénient mineur par rapport à l'avantage considérable d'un dégazage parfait et d'une rigueur de mesurage capable de satisfaire les normes les plus sévères.

A titre d'exemple et pour faciliter la compréhension de l'invention, on a représenté aux dessins annexés :

Figure 1, une vue schématique d'un camion citerne muni du dispositif selon l'invention ;

Figure 2, une vue schématique d'une forme de réalisation du dispositif selon l'invention.

En se reportant à ces figures, on voit que le dispositif de l'invention, par exemple monté à la sortie de la citerne 1 d'un camion, comporte, d'amont en aval et successivement, une alimentation sous pression 2 (par exemple par la pompe 2a) raccordée à la citerne 1, une cuve 3 surmontée d'une cloche de dégazage 18 comprenant un flotteur 8 commandant une soupape 9 contrôlant l'orifice de dégazage 10, un compteur volumétrique 5 et une vanne ou clapet d'arrêt 6 contrôlant la sortie 19 ; l'orifice de dégazage 10 débouche dans un volume de dégazage 4, 12 dont la pression est communiquée à l'une des faces du clapet 6, l'autre face étant soumise à la pression régnant dans le liquide en aval du compteur 5 (La vanne ou clapet 6 peut être du type à piston, à clapet ou à membrane).

De préférence, la surface de la vanne 6 soumise à l'action de la pression du liquide est sensiblement plus grande lorsque le clapet est ouvert que lorsqu'il est fermé : ceci peut être obtenu au moyen d'un siège périphérique 20 sur lequel vient reposer la vanne lorsqu'elle se ferme.

Conformément à l'invention, la communication à l'air libre ou à la pression atmosphérique du volume de dégazage 4, 12 est réalisé uniquement par une section de fuite 17 très faible de telle sorte que la pression dans ce volume s'établisse quasi instantanément à la valeur régnant dans la cuve 3 dès que l'orifice 10 s'ouvre, et se maintienne à cette valeur pendant toute la durée d'ouverture de cet orifice.

Cette section sera inférieure à 3 mm$^2$ pour des pressions d'alimentation de l'ordre de 1 à 10 bars, et de préférence de l'ordre de 1 mm$^2$ pour des pressions de l'ordre de 4 à 10 bars, telle que celles obtenues par une pompe 2a , alors que la section de l'orifice 10 sera de l'ordre de 50 mm$^2$ ou davantage.

Le fonctionnement est alors le suivant.

En l'absence de gaz dans le liquide, le flotteur 8 est en position haute, l'orifice 10 est fermé, le volume 4, 12 ainsi que la chambre 14 de mise en pression de la vanne ou clapet 6 sont à la pression atmosphérique ; la vanne 6 reste ouverte et le liquide est délivré par la sortie 19 contrôlée en 7 par l'opérateur.

Dans la cloche 18, du gaz s'accumule à la pression de la cuve 3. Lorsque l'accumulation dépasse une valeur prédéterminée le flotteur, en descendant, ouvre l'orifice 10. Le gaz passe dans le volume 4, 12 où la pression s'élève instantanément, du fait de la faible valeur de la fuite 17 jusqu'à égaliser la pression dans la cuve 3.

Le clapet 6 est alors soumis à une pression différentielle, car la pression en aval du compteur 5 est inférieure à la pression dans la cuve 3 en raison de la perte de charge introduite par le compteur 5 ; le clapet 6 se ferme donc instantanément. Le ressort représenté en 13 ne joue qu'un rôle d'accélération de la fermeture et de maintien en position fermée lorsque le dispositif n'est pas utilisé. Lorsque le clapet 6 est fermé, la circulation s'arrête ainsi que la perte de charge provoquée par le compteur 5. Mais la surface du clapet 6 soumise à l'action du liquide se trouve diminuée par le siège de clapet 20. La pression régnant dans le volume 4, 12, additionnée éventuellement de l'effort exercé par le resort 13 suffit donc au maintien du clapet 6 en position fermée.

Etant donné que tout le dégazage s'opère uniquement par l'orifice calibré 17, de section très faible, la pression régnant dans la cuve 3 se maintient dans le volume 4, 12 pendant la quasi totalité du dégazage et plus précisément jusqu'à la fermeture de l'orifice 10. La pression tombe alors progressivement dans le volume 4, 12 et la vanne 6 s'ouvre. Il est à remarquer également que l'évacuation de gaz se faisant uniquement par l'orifice 17, l'ouverture de l'orifice 10 ne provoque pratiquement pas de baisse de pression dans la cuve 3 et il n'y a donc pas de création d'émulsion dans la cuve 3 et la cloche 18.

La dimension de l'orifice de fuite est importante pour obtenir de bons résultats. Les études et essais effectués ont permis de déterminer les dimensions suivantes :

- Lorsque l'alimentation du dispositif est effectuée sous une pression supérieure à 1 bar (1 à 10 bars), par exemple en cas d'alimentation avec une pompe, la section de l'orifice 17 ne sera pas supérieure à 3 mm$^2$ et de préférence de l'ordre de 1 mm$^2$ pour une pression de 4 à 10 bars.

- Lorsque l'alimentation est à pression inférieure à 1 bar (0,1 à 1 bar), par exemple en cas d'alimentation par gravité, on peut admettre des sections plus élevées, jusqu'à 5 mm$^2$ environ.

Par contre, l'orifice 10 est de section beaucoup plus grande, de l'ordre de 50 à 150 mm$^2$ de préférence,

En effet, le fonctionnement de la vanne 6 est, en quelque sorte, mixte en ce que la pression exercée sur une face est une pression hydraulique tandis que la pression exercée sur l'autre face est pneumatique ; d'autre part, la pression hydraulique ci-dessus n'est même pas purement hydraulique dans les périodes de présence de gaz dans le liquide. Or il n'est possible d'obtenir des résultats valables et fiables qu'aux moyens de conditions très sûres concernant le fonctionnement de la vanne d'arrêt 6. C'est ainsi, par exemple, qu'avec un orifice 17 de 1,5 mm$^2$ pour une pression d'alimentation de 5 bars, on peut rencontrer des défauts de fonctionnement et une réouverture momentanée de la vanne 6 après un temps de fermeture ; en effet l'arrêt de la circulation provoque une montée de la pression hydraulique s'exerçant sur la vanne tandis que l'ouverture de l'orifice 10 tend à provoquer une baisse de pression ; la pression d'alimentation subit donc des variations brusques et pour peu que l'orifice 17 introduise une perte de charge notable et variable, le fonctionnement n'est plus réellement contrôlé.

A cet égard, il est important que la surface de la vanne 6 soumise à la pression du liquide soit, à l'état fermé, substantiellement inférieure à sa valeur à l'état ouvert, la diminution de surface à la fermeture étant de préférence de l'ordre de 20 % à 40 % (Le siège 20 sur lequel vient

7

0192905

s'appliquer la face du clapet ou piston de la vanne 6 couvrant 20 % à 40 %
de sa surface).

Une telle importance de diminution assure l'absence totale de battement à
la fermeture, en dépit de variation de volume de l'espace 4, 12 provoquée
par le déplacement du clapet, piston ou membrane de la vanne 6. Elle assure
ensuite le maintien constant de la fermeture en dépit des variations de
pressions dans le liquide sans que le ressort 13 ait à jouer un rôle
important.

Dans la description qui précède, on a indiqué le volume 4, 12 comme
communiquant avec l'air libre ou à la pression atmosphérique ; il peut être
avantageux de retourner le gaz dans un volume clos tel que celui d'un
réservoir, par exemple le réservoir fournisseur de liquide, la
communication à l'air libre se trouvant dès lors indirecte.

L'invention prévoit également de retourner le gaz dans la tuyauterie de
sortie 19 en aval de la vanne 6 ; en effet un tel mode d'évacuation n'a
aucune influence sur le mesurage effectué par le compteur 5, non plus que
sur le fonctionnement de la vanne 6 et il n'y a donc pas d'inconvénient à
réinjecter le gaz dans la tuyauterie ; le gaz est alors envoyé dans le
réservoir récepteur.

La fuite calibrée 17 peut évidemment être réalisée en un ou plusieurs
orifices, la section totale de fuite ayant les valeurs spécifiées.

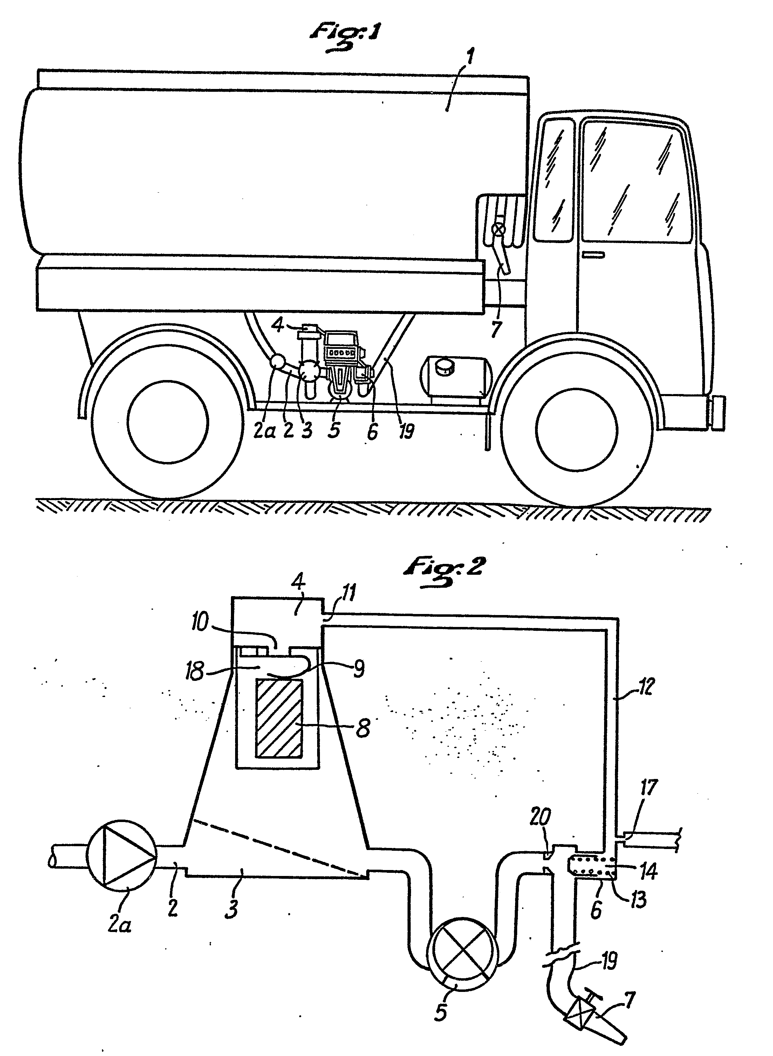

Le dispositif selon l'invention peut être réalisé sous des formes diverses
le schéma de la figure 2 n'étant qu'un exemple schématique ; en particulier,
il est avantageux que l'espace de dégazage 4, 12 soit faible.

L'importance des avantages de l'invention est que jusqu'à maintenant, la
vidange d'un compartiment de citerne de l'ordre de 1.000 à 2.000 litres
laissait passer entre 5 et 10 litres de gaz. Pour un camion de 11
compartiments, cela donne plus de 50 litres par voyage, alors que par les
moyens de l'invention, cette quantité est réduite à 0,5 litre par
compartiment soit dix fois moins. Un tel progrès mesure l'avantage
considérable de l'invention.

Revendications de brevet

1. Dispositif pour le transvasement de liquide avec dégazage et mesurage, notamment pour les hydrocarbures, comprenant, d'amont en aval une alimentation sous pression (2), une cuve (3) surmontée d'une cloche de dégazage (18) un flotteur (8) placé dans ladite cloche et commandant une soupape (9) contrôlant l'orifice (10) de dégazage reliant la cuve à un volume de dégazage (4, 12) communiquant à l'air libre, un compteur volumétrique (5) interposé entre la cuve (3) et la sortie de liquide (19) sur laquelle est prévue une vanne d'arrêt (6) soumise sur une face à la pression du liquide et sur l'autre face à la pression régnant dans le volume de dégazage (4, 12), caractérisé en ce que le volume (4, 12) communique à l'air libre ou à la pression atmosphérique uniquement par un orifice de fuite calibré de section inférieure à 3 mm$^2$ pour des pressions d'alimentation supérieures à 1 bar et pouvant atteindre 3 à 5 mm$^2$ lorsque la pression d'alimentation est comprise entre 1 et 0,1 bar.

2. Dispositif selon la revendication 1, caractérisé en ce que la section de fuite (17) est de l'ordre de 1 mm$^2$ pour des pressions d'alimentation supérieures de l'ordre de 4 à 10 bars.

3. Dispositif selon l'une quelconque des revendications précédentes, caractérisé en ce que la surface de la vanne (6) sur laquelle s'applique la pression du liquide est, en position de fermeture, de 20 % à 40 % plus faible qu'en position d'ouverture.

4. Dispositif selon l'une quelconque des revendications précédentes, caractérisé en ce que la surface de l'orifice (10) de dégazage est supérieure à 50 mm$^2$.

5. Dispositif selon l'une quelconque des revendications précédentes, caractérisé en ce que l'orifice de fuite (17) communique par une canalisation avec un réceptacle tel que le volume de gaz d'un réservoir.

6. Dispositif selon l'une quelconque des revendications précédentes, caractérisé en ce que l'orifice de fuite (17) communique avec la canalisation de sortie (19) en un point situé en aval de la vanne (6).

Fig.1

Fig.2

**0192905**

Office européen
des brevets

**RAPPORT DE RECHERCHE EUROPEENNE**

Numero de la demande

EP 85 40 2579

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int. Cl.4) |
|---|---|---|---|
| D,X | US-A-3 419 035 (HARTZ) <br> * Figures 2,3; colonne 3, ligne 4 - colonne 6, ligne 2 * | 1 | B 67 D 5/58 |
| Y | | 5,6 | |
| | --- | | |
| Y | US-A-2 103 020 (SAARINEN) <br> * Figures 1,2,4; page 2, colonne 2, lignes 39-54; page 2, colonne 2, ligne 75 - page 3, colonne 1, ligne 3 * | 5,6 | |
| | --- | | |
| A | US-A-2 728 196 (BOWSER) | | |
| | ----- | | |

**DOMAINES TECHNIQUES RECHERCHES (Int. Cl.4)**

B 67 D
B 01 D

Le présent rapport de recherche a été établi pour toutes les revendications

| Lieu de la recherche | Date d'achèvement de la recherche | Examinateur |
|---|---|---|
| LA HAYE | 14-04-1986 | DEUTSCH J.P.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82